# EUROPEAN PATENT SPECIFICATION

(11) **EP 0 425 707 B1**
(45) Date of publication and mention of the grant of the patent: **20.09.1995**
(21) Application number: 90907458.5
(22) Date of filing: 17.05.1990
(51) Int. Cl.: G06K 7/14

(54) **BAR CODE READING METHODS AND APPARATUS**
STRICHCODE-LESEVERFAHREN UND -VORRICHTUNGEN
PROCEDES ET APPAREILS DE LECTURE DE CODE A BARRES

(30) Priority: 17.05.1989 JP 123402/89
(43) Date of publication of application: 08.05.1991
(73) Proprietor: FUJITSU LIMITED, Kawasaki-shi, Kanagawa 211 (JP)
(72) Inventor: WATANABE, Mitsuo, Yokohama-shi Kanagawa 277 (JP)
(74) Representative: Fane, Christopher Robin King
(86) International application number: PCT/JP90/00625
(87) International publication number: WO 90/14638

(56) References cited:
- EP-A- 0 036 951
- GB-A- 2 166 574
- JP-A- 5 263 625
- JP-A- 5 296 827
- JP-A-53 120 339
- US-A- 3 932 840
- IBM TECHNICAL DISCLOSURE BULLETIN vol. 17, no. 7, December 1974, pages 2080 -2081; R.A BRECKE, L.S. HEIM, V.D. LEE: 'code validation in an optical bar-code reader'
- IBM TECHNICAL DISCLOSURE BULLETIN vol. 27, no. 7A, December 1984, pages 3720 -3721; E.C. BROOCKMAN: 'UTILIZATION OF DATA FROM PARTIAL READS OF UPC LABEL'

## Description

The present invention relates to bar code reading methods and apparatus.

Labels having bar codes may be classified into, for example, two kinds, i.e. eight-digit labels and 13-digit labels. As described for example in Japanese Industrial Standards (JIS) X0501, the eight-digit label is constituted by a left block and a right block, each block having four digits. The 13-digit label has left and right blocks each having six digits, and a further digit preceding the left block which provides two flags for indicating a figure.

In a known method of reading a bar code, suitable for reading a bar code including a block of data the number of digits of which is equal to one of a plurality of predetermined standard values, in a reading operation one such block of the bar code is scanned a plurality of times to derive for that block a plurality of data items representative respectively of the data of the block. However, when reading a 13-digit label, a six-digit block is sometimes read wrongly as a four-digit block depending on the beam scanning method employed. As explained later in the present specification, in the above method if the left and right 6-digit blocks are both read wrongly as having four digits, the data will be assumed to correct and in this way a 13-digit label can be read erroneously as an eight-digit label.

According to a first aspect of the present invention there is provided a bar code reading method, for reading a bar code including a block of data the number of digits of which is equal to one of a plurality of predetermined standard values, wherein, in a reading operation, one such block of the bar code is scanned a plurality of times to derive for that block a plurality of data items representative respectively of the data of the block;
characterised by the steps of:
(a) determining the respective numbers of digits of the data items of the said plurality;
(b) storing the data items in storage regions, according to the determined numbers of digits, in such a way that data items having the same number of digits are stored in the same storage region; and
(c) detecting whether or not data items have been stored in two different storage regions and, if so, determining that the said reading operation has produced erroneous data.

According to a second aspect of the present invention there is provided a bar code reading method, for reading a bar code including a block of data the number of digits of which is equal to one of a plurality of predetermined standard values, wherein, in a reading operation, one such block of the bar code is scanned a plurality of times to derive for that block a plurality of data items representative respectively of the data of the block;
characterised by the steps of:
(a) determining the respective numbers of digits of the data items of the said plurality;
(b) for each different determined number of digits, counting the number of data items having that number of digits; and
(c) detecting, based on the counted numbers of data items, whether or not there are two data items having different respective numbers of digits and, if so, determining that the said reading operation has produced erroneous data.

According to a third aspect of the present there is provided bar code reading apparatus, for reading a bar code including a block of data the number of digits of which is equal to one of a plurality of predetermined standard values, which apparatus comprises:
data item generating means operable in a reading operation of the apparatus to scan one such block of the bar code a plurality of times so as to derive for that block a plurality of data items representative respectively of the data of the block;
characterised by:
digit-number determining means connected for receiving the data items derived by the data item generating means and operable to determine the respective numbers of digits of the data items of the said plurality;
a plurality of data item storage means corresponding respectively to the different standard values;
storage control means, connected for receiving the data items derived by the data item generating means and also connected to each of the said data item storage means, for causing the data items to be stored in the data item storage means, according to the determined numbers of digits, in such a way that data items having the same number of digits are stored in the same storage means; and
error detection means connected to said storage means and operable to detect whether or not data items have been stored in two different storage means and, if so, to determine that the said reading operation has produced erroneous data.

According to a fourth aspect of the present invention there is provided bar code reading apparatus, for reading a bar code including a block of data the number of digits of which is equal to one of a plurality of predetermined standard values (4/6), which apparatus comprises:
data item generating means operable in a reading operation of the apparatus to scan one such block of the bar code a plurality of times so as to derive for that block a plurality of data items representative respectively of the data of the block;
characterised by:
digit-number determining means connected for receiving the data items derived by the data items generating means and operable to determine the respective numbers of digits of the data items of the said plurality;
a plurality of counting means corresponding respectively to the different standard values, each counting means being connected for receiving the data items derived by the data item generating means and being operable, for the standard value to which that counting means corresponds, to count the number of data items determined by the digit-number determining means as having a number of digits equal to that standard value; and
error detection means connected to the said counting means for receiving therefrom the respective counted numbers of data items and operable to detect on the basis of those respective counted numbers whether or not there are two data items having different respective numbers of digits and, if so, to determine that the said reading operation has produced erroneous data.

Such bar code reading methods and apparatus can reduce a read error rate.

Incidentally, another technique intended to reduce the read error rate in a bar code reader is described in IBM Technical Disclosure Bulletin, Volume 17, No. 7, December 1974, pages 2080-1, under the title "Code Validation in an Optical Bar-Code Reader". In this technique the bar code is scanned a number of times and, for each data block, the most frequent sequence of digits is detected and provided to an external device as the correct bar code data.

Reference will now be made, by way of example, to the accompanying drawings, in which:
Fig. 1 is a view showing an eight-digit label;
Fig. 2 is a view showing a 13-digit label;
Fig. 3 is a view showing data in a buffer memory;
Fig. 4 is a block diagram for use in explaining a principle underlying an aspect of the present invention;
Fig. 5 is a block diagram showing bar code reading apparatus embodying the present invention;
Fig. 6 is a view showing a configuration of data provided by a demodulator 16 in the Figure 5 apparatus;
Fig. 7 is a view showing a configuration of data stored in a buffer memory in the Figure 5 apparatus;
Fig. 8 is a view showing configurations of data stored in respective six-digit and four-digit memories of the Fig. 5 apparatus;
Fig. 9 is a flowchart for use in explaining operation of a central processing unit in the Fig. 5 apparatus:
Fig. 10 is a block diagram showing another example of bar code reading apparatus embodying the present invention; and
Fig. 11 is a flowchart for use in explaining operation of a central processing unit in the Fig. 10 apparatus.

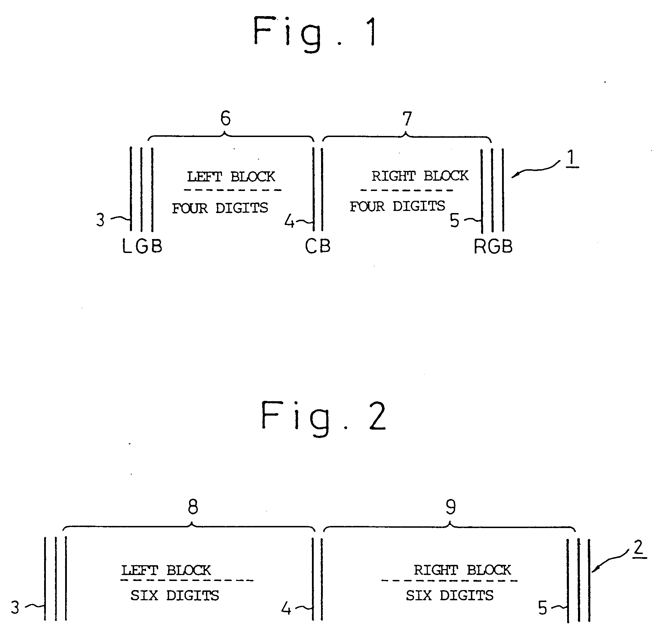

To understand the present invention more clearly, a conventional bar code reading system and its problems will be explained with reference to Figs. 1 to 3.

Labels having bar codes are classified into two kinds, i.e. an eight-digit label 1 shown in Fig. 1 and a 13-digit label 2 shown in Fig. 2.

As shown in Fig. 1, the eight-digit label 1 has a left guard bar (LGB) 3, a center bar (CB) 4, and a right guard bar (RGB) 5, and has two blocks 6 and 7. Each of the blocks 6 and 7 comprises four-digit data (four is one standard value for the number of digits).

As shown in Fig. 2, the 13-digit label 2 has a left guard bar 3, a center bar 4, and a right guard bar 5, and has two blocks 8 and 9. Each of the two blocks 8 and 9 is formed by data having six digits (six is another standard value for the number of digits).

The eight-digit label 1 and 13-digit label 2 are read as follows:

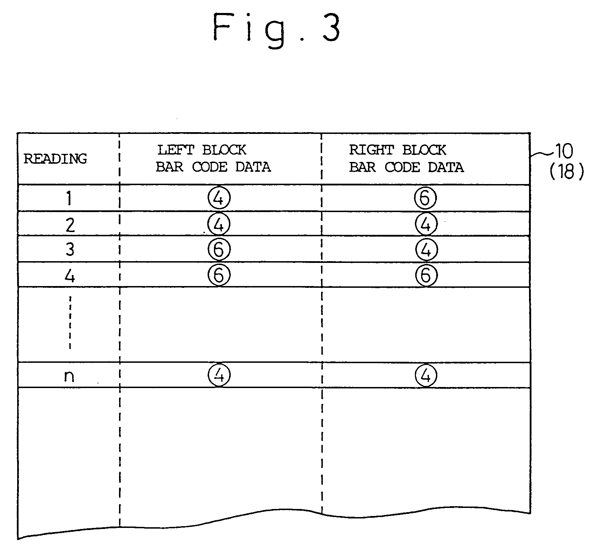

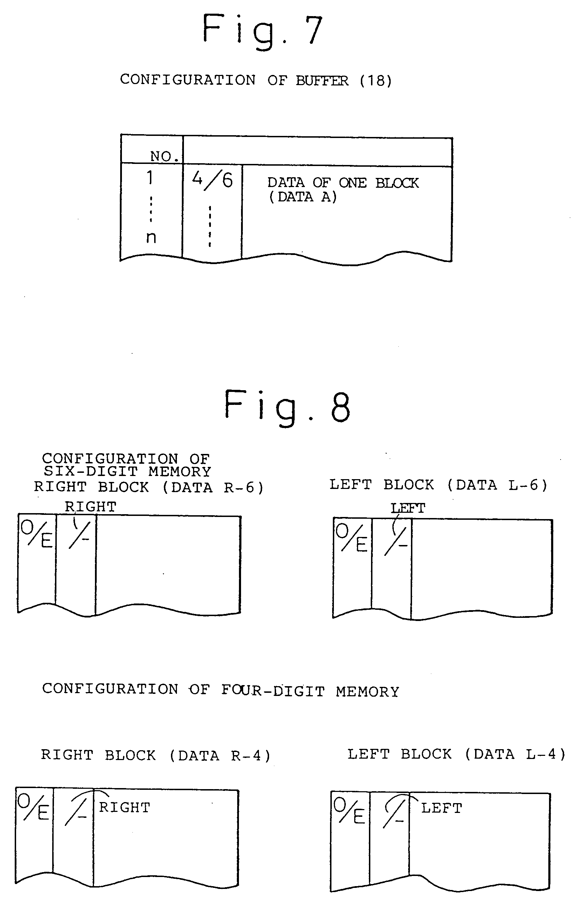

A bar code reader converts a bar code into a digital signal which is demodulated and stored in a buffer memory 10. Since the scanning speed of a light beam is high, the bar code printed on a bar code label is usually read by the bar code reader several times in a single reading operation in which the bar code is traced once from the right to the left or from the left to the right. The above-mentioned buffer memory 10, therefore, stores, in one reading operation, plural pairs of data items, each pair of data items being made up of a data item corresponding to the left block and a data item corresponding to the right block, as shown in Fig. 3. Fig. 3 shows that the 13-digit label 2 has been scanned "n" times in one reading operation, and that the buffer memory 10 is storing "n" pairs of data items. In the figure, each circled numeral denotes the number of digits that has actually been read in a particular scanning operation (scan). For example, in the first scan, only four digits are read from the left block which in fact has six digits, whereas six digits are correctly read from the right block. Each bar code data item, corresponding to a left or right block, is stored in the buffer memory 10 with an associated flag indicating the number of digits (see Fig. 7). A CPU determines the number of digits of each demodulated data item stored in the buffer memory 10 according to the flag associated with that data item, and stores the four- and six-digit data items separately in a four-digit memory or a six-digit memory, respectively.

If the number of digits of the demodulated data is not four or six, the CPU determines it as a reading error and removes the data items corresponding to both the left and right blocks. The CPU carries out a modulus check and a parity check on the data item stored in the four-digit or six-digit memory and picks up correct data items that have successfully passed the checks. Thereafter, the CPU retrieves from among the data items that have successfully passed the modulus and parity checks a pair of left and right data items (i.e. the two data items corresponding respectively to the left block and the right block) in which the left and right data items both have the same number of digits. The CPU then sends the pair of data items to a further device (for example, a data processing unit having a processor for processing and managing bar code data) via an interface.

This sort of conventional bar code reading system, however, suffers from a problem in that it can erroneously read six-digit data as four-digit data in both the left and right blocks of a 13-digit label depending on the beam scanning method employed (see, for example, the second and "n"th readings in Fig. 3), and then store the read data in the four-digit memory, with the result that the 13-digit label is interpreted wrongly as an eight-digit label.

In view of the above-mentioned problem, the present invention is based on an idea that all data stored in the buffer memory must be rejected as an error if four-digit data is found in a buffer memory after reading a 13-digit label, and has an object to reduce a read error rate in bar code reading.

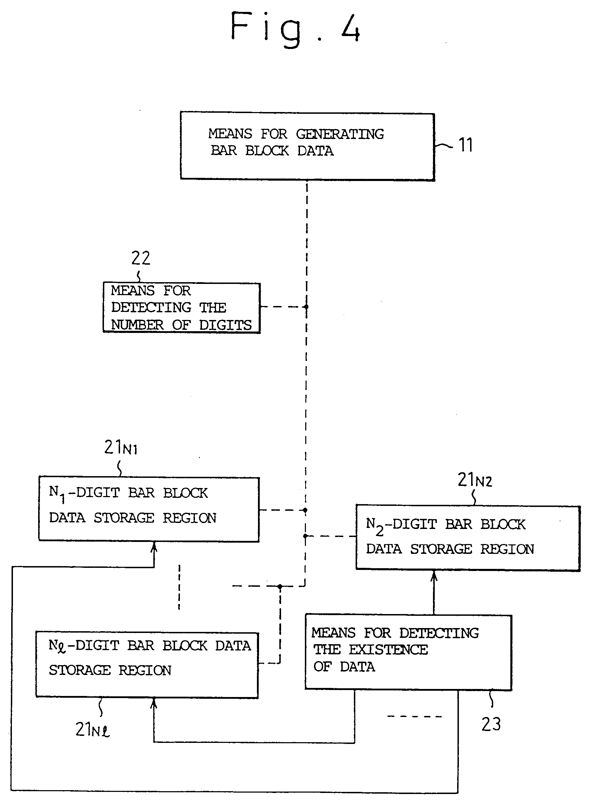

Figure 4 is a block diagram showing a bar code reading system according to an aspect of the present invention.

In Fig. 4, numeral 11 is a bar block data generating means (data item generating means) for generating a plurality of bar block data items in one reading operation of a bar code; 21N1, 21N2, ..., 21Nℓ are bar block data storage regions (data item storage regions) for storing bar code data items corresponding to left and right bar code blocks, the data items are stored in different storage regions according to the numbers of digits N1, N2, ..., Nℓ in the bar code data item; 22 is a number of digits detecting means (digit-number determining means) for detecting the number of digits: and 23 is a data existence detecting means (error detection means) for detecting whether or not data exists in at least one storage region 21Ni (i=l, 2, ..., or ℓ) among the bar block data storage regions 21N1, 21N2, ..., 21Nℓ.

In Fig. 4, the bar block data generating means 11 generates a plurality of bar block data items in one reading operation of a bar code. The number of digits in the bar code blocks in the bar code must be one of a plurality of predetermined standard values.

The digit-number determining means 22 detects the number of digits Ni (i=l, 2, ..., ℓ) of each bar block data item, and stores the bar block data item in that one of bar block data storage regions 21Ni which corresponds to the number of digits.

After every bar block data obtained in one reading operation is stored in one of the bar block data storage regions, the data existence detecting means 23 judges whether or not data exists (i.e. data items have been stored) in two or more of the bar block data storage regions. Only when there are data items in a single bar block data storage region, and there is no data in the other bar block data storage regions, is it judged that the data have been correctly read, and this matter is notified to the aforementioned further device. If there are data items in a plurality of the bar block data storage regions, it is judged to be a read error, and the contents of the bar block data storage regions are cleared. Instead of the bar block data storage regions 21Ni which store the data items themselves, it is possible to arrange means for storing just the numbers of bar block data items having different numbers of digits (digit numbers). In this case, if the means for storing the numbers of data items contain two or more different digit numbers, it is judged to be a read error, and the contents of the means for storing the numbers of data items are cleared.

For example, when a bar code label to be read is expected to be either a 13-digit label or an eight-digit label, in the example of Fig. 4 a four-digit storage region 21N1 and a six-digit storage region 21N2 are provided as the bar block data storage regions. In a bar code reading operation, when at least one of the left and right blocks is read correctly at every scan as having six-digits, all the six-digit bar code data items for that particular block will be stored in the storage region 21N2 and no data items for that block will be stored in the storage region 21Nl. Therefore, if the data existence detecting means 23 detects that the storage region 21N1 has no data, it is judged that the read bar code is of 13 digits. Thus, a 13-digit bar code will never be read erroneously as an eight-digit bar code, thus reducing a read error rate.

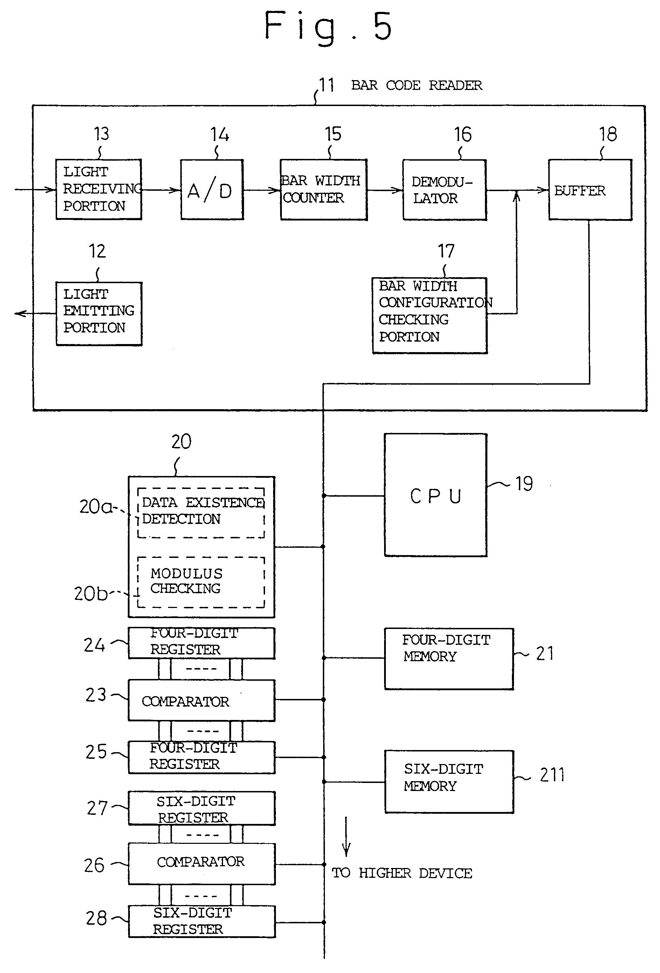

Figure 5 is a view showing an embodiment of the present invention corresponding to the aspect of Fig. 4.

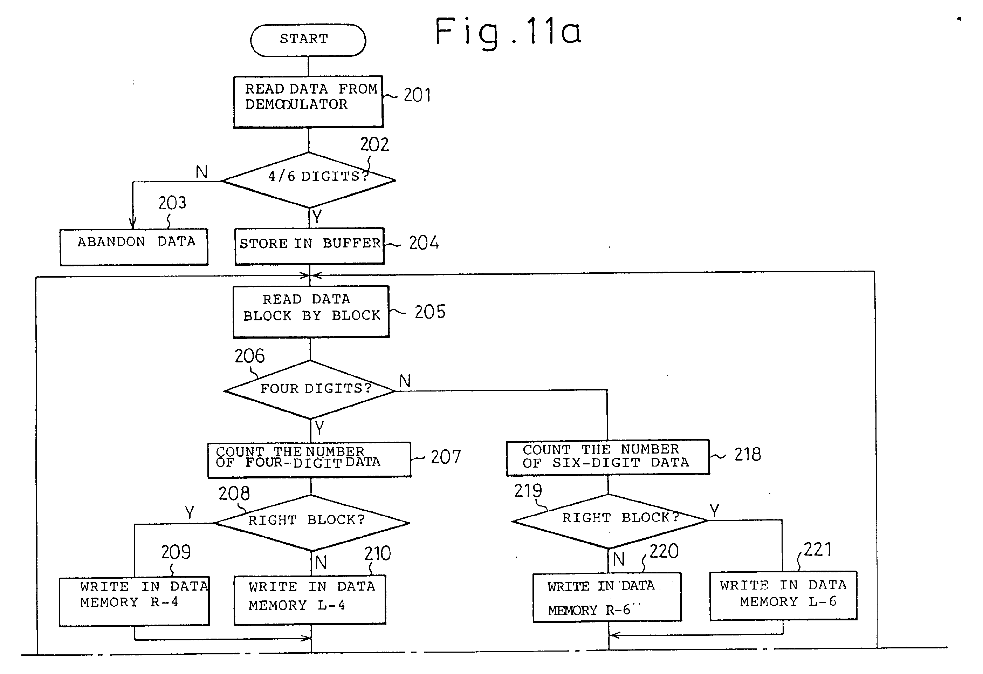

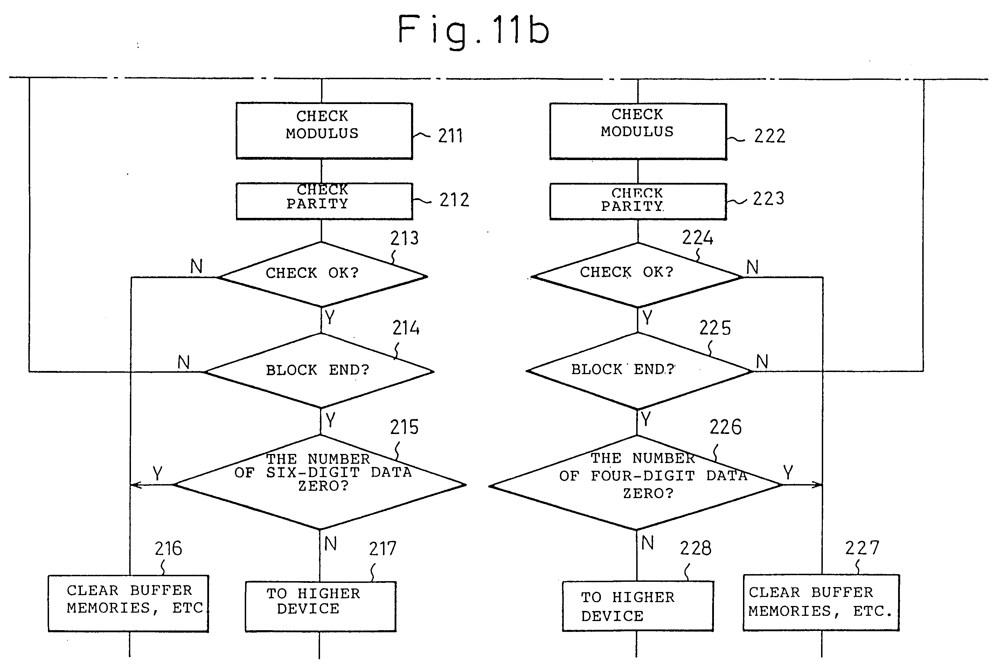

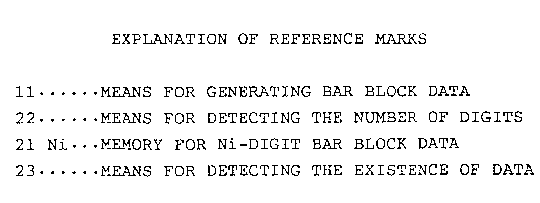

In Fig. 5, 11 is a bar code reader, and 12 a light emitting portion disposed inside the bar code reader 11. The light emitting portion 12 emits a laser beam. The laser beam is formed into a predetermined beam pattern by a polygon motor (not shown), and reflected by a bar code. It is assumed in this case that the reader is only intended for use with eight-digit bar codes and 13-digit bar codes. Numeral 13 is a light receiving portion for receiving collected reflected light and converting it into an electric signal.

Numeral 14 is an A/D converter that differentiates an output of the light receiving portion 13 and converts it into a digital signal. Numeral 15 is a bar width counter for quantization. The bar width counter 15 counts the width of each white or black bar of the bar code represented by a digital signal and outputs the resulting count value as a digital signal.

Numeral 16 is a demodulator for demodulating the digital signal provided by the bar width counter 15 into a digital signal representing a decimal numeral. Numeral 17 is a bar width configuration checking portion for checking the bar width configuration whilst demodulation is taking place, and storing only eight-digit or 13-digit data in a buffer memory 18. The buffer memory 18 stores, therefore, only those demodulated eight-digit or 13-digit data whose bar width configurations have been checked.

The light emitting portion 13, A/D converter 14, bar width counter 15, demodulator 16, and bar width configuration checking portion 17 form the bar code data generating means shown in Fig. 4.

Numeral 19 is a central processing unit (CPU). A memory 20 stores programs necessary for operating the CPU, including a data existence detecting program 20a and a program 20b for carrying out the modulus check. A bar code data storage region comprises a four-digit memory 21 and a six-digit memory 211. The CPU 19 determines the number of digits in each left or right block data item read out of the buffer memory 18, and stores the data item in the four-digit memory 21 or the six-digit memory 211 according to the number of digits. The CPU 19 uses the modulus check program 20b stored in the memory 20 and carries out the modulus check on the data stored in the four-digit memory 21 or the six-digit memory 211, and picks up data items that have successfully passed the check. Numeral 23 is a four-digit comparator which compares a predetermined null value (four Os) stored in a register 24 with a data item which has passed the modulus check and is stored in a register 25. The data item in the register 25 is one that has been read out of the four-digit memory 21. If all digits match one another in the comparison, i.e. if all digits of the data item read out of the four-digit memory 21 are Os, the comparator 23 outputs a "1", whereas if mismatch occurs even in one digit, it outputs a "0". Numeral 26 is a six-digit comparator which compares a predetermined null value (six Os) stored in a register 27 with a data item which has passed the modulus check and is stored in a register 28. The data in the register 28 is one that has been read out of the six-digit memory 211. If all digits match one another, the comparator 26 outputs a "1", and if mismatch occurs even in one digit, it outputs a "0". Using the comparator 23, registers 24 and 25, comparator 26, registers 27 and 28, and the data existence detecting program 20a, the CPU 19 detects whether or not four-digit data or six-digit data exist. Only when no four-digit data exists does the CPU 19 send six-digit data to an external device. In this way, a pair of finally correct six-digit data are sent to the external device (for example, a data processor for processing and managing bar code data) through an interface.

In reading a bar code comprising four digits per block, six-digit data will never be read so that it is not necessary to detect the existence of six-digit data.

Next, a bar code reading operation will be explained in detail.

In a single reading operation, a bar code is scanned "n" times. A reflected beam from the bar code is converted into an electric signal by the light receiving portion 13, and then into a digital signal by the A/D converter 14. The bar width counter 15 counts a bar width based on the digital signal, and the demodulator 16 demodulates the counted value into a digital signal representing a decimal numeral. At the same time, the bar width configuration checking portion 17 checks a configuration of the bar width, and only the data that has four or six digits in one block is stored in the buffer memory 18. The format of the data stored in the buffer memory 18 is the same as that of Fig. 3.

If the read bar code is on an eight-digit label, each block of the bar code comprises four-digit data, which will not be read as six-digit data irrespective of the manner of scanning, so that, of the bar code data items stored in the buffer memory 18, all four-digit data items that have successfully passed a modulus check are stored in the four-digit memory 21. In carrying out the modulus check, the CPU 19 uses an eight-digit modulus check program.

Since the six-digit memory 211 has no data, the comparator 26 provides a signal of "1". In this respect, since no data is transferred from the six-digit memory 211 to the register 28, the register 28 has an initial value comprising six digits of Os. The contents of the register 28 match the contents of the register 27 in which Os have been stored in advance, so that the comparator 26 provides the signal of "1" indicating that there is not any six-digit data. On the basis of this "1" signal, it is judged that the read bar code has eight digits.

If the read bar code is on a 13-digit label, it may happen, depending on the manner of beam scanning, that six-digit data of one block is read as four-digit data and stored in the four-digit memory 21. Therefore, after a single reading operation, the buffer memory 18 may contain a mixture of six-digit data items and four-digit data items as shown in Fig. 3.

In the present embodiment, in reading the 13-digit label, it is judged whether or not the four-digit memory 21 has data. If it has, all data in the buffer memory 18 are judged to be wrong and cleared. In the example of Fig. 3, since the first right block, third left block, fourth left block and fourth right block data items stored in the buffer memory 18 are six-digit data items, these six-digit data items are stored in the six-digit memory 211 by the CPU 19. The CPU 19 uses the data existence detecting program 20a to read four-digit data items from the four-digit memory 21 and stores the same in the register 25. The comparator 23 compares the contents of the register 25 with the contents of the register 24 digit by digit. The contents of the register 24 are all Os. Since the four-digit data item in the register 25 includes at least one digit that is not 0, the compared result does not match, and therefore, the comparator 23 provides a "0"-signal. Consequently, the CPU 19 can detect that the four-digit memory 21 has some four-digit data.

As a result, it is judged that the reading of the bar code of the 13-digit label was wrong, and the contents of the buffer memory 18, four-digit memory 21, and six-digit memory 211 are all cleared.

In summary, the CPU 19 carries out a modulus check using the eight-digit modulus program for data stored in the four-digit memory 21, and a 13-digit modulus program for data stored in the six-digit memory 211 (these programs are stored as modulus check programs in the memory 20). The CPU 19 retrieves four-digit data items from among the data items that have successfully passed the modulus check. If it is judged, as described before, that the four-digit memory 21 has data in the case of a 13-digit label so that the reading operation of the 13-digit bar code has gone wrong, the CPU 19 clears the data in the buffer memory 18, six-digit memory 211, and four-digit memory 21.

In this way, data that may be erroneously recognized as an eight-digit label are rejected, and a bar code from a 13-digit label will never be recognized as a bar code from an eight-digit label.

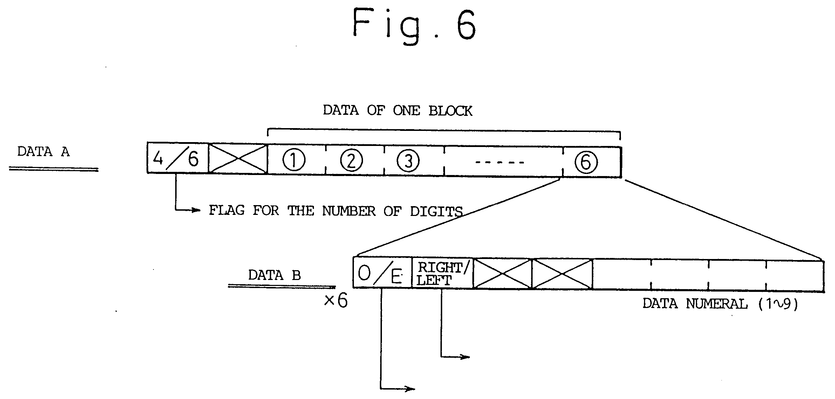

Figure 6 is a view showing the format of one data item (one block) stored in the buffer memory 18. In the figure, the data item has six digits from ① to ⑥. At the head of this data item (referred to as data item A), a flag indicating the number of digits, i.e. 6, is arranged. In the data item A, each of the digits is illustrated as data B, which comprises a parity flag for identifying an even parity or an odd parity, a left/right flag for identifying left block data or right block data, and digital data numerals for indicating a data numeral value (one of 1 to 9) for that digit of the block. If the data item A is a four-digit data item, the flag for the number of digits is 4, and only the data of digits ① to ④ are stored. One reading operation provides a plurality of data items each with the format of the data item A of Fig. 6. Each data item is provided with the 4/6 flag indicating the number of digits, and stored in the buffer memory 18.

Figure 7 is a view showing the data item A stored in the buffer memory 18 after one reading operation. As shown in the figure, "n" scans are carried out, each producing a data item corresponding to one block and an associated flag indicating the number of digits in the data item.

Figure 8 is a view showing the contents of left-block and right-block storage portions of the six-digit memory 211 and four-digit memory 21. As shown in the figure, each memory stores even/odd parity flags, flags indicating left/right blocks, and bar code data.

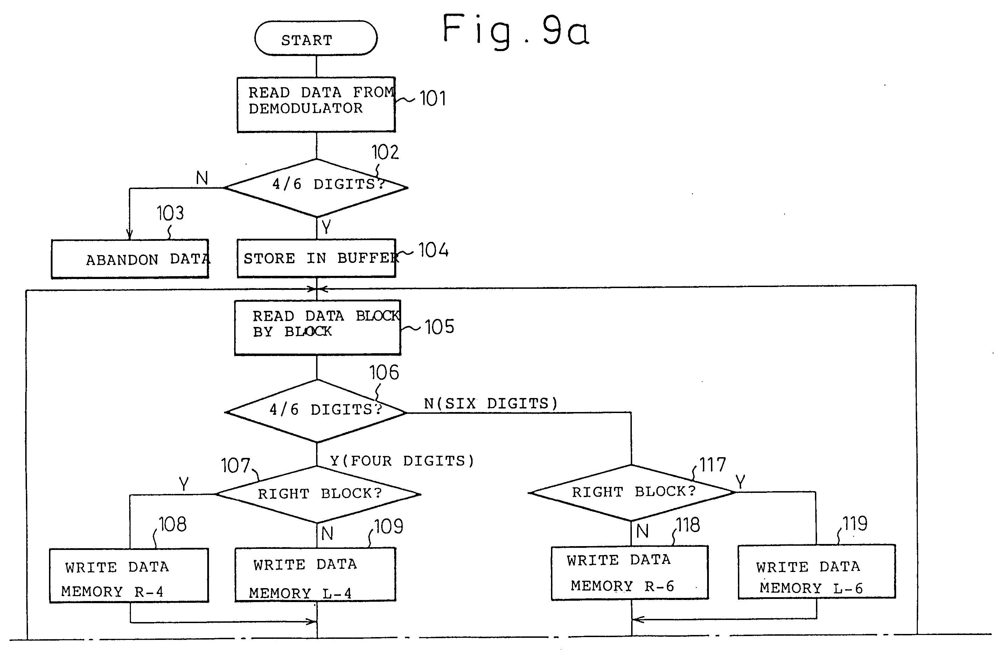

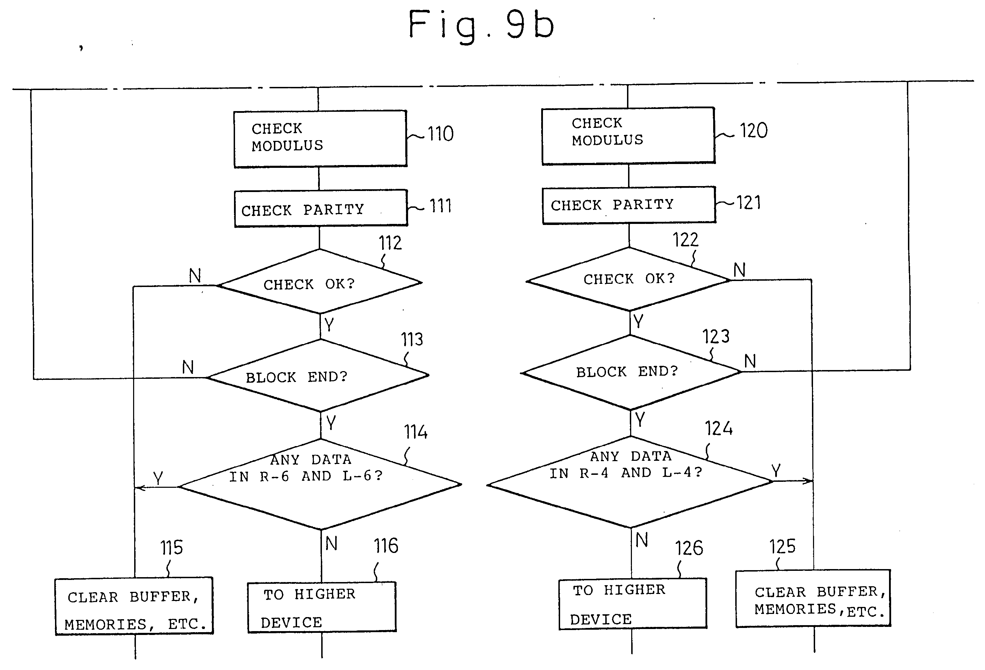

Figure 9 is a flowchart explaining an operation of the CPU 19 shown in Fig. 5. In the figure, at a step 101, all data items obtained by one reading operation are read from the demodulator 16. In step 102, the bar width configuration checking portion 17 discriminates whether each data item has four digits or six digits. In step 103, data items other than the four-digit data items and six-digit data are discarded. In step 104, the buffer memory 18 stores only the four-digit and six-digit data items. Consequently, the buffer memory 18 stores total of "n" data items corresponding to left and right blocks. Next, in step 105 the data is read item by item from the buffer memory 18, and in step 106, it is judged whether the read data item has four digits or six digits according to its associated flag. If it is four-digit data, in step 107 it is judged whether the data corresponds to a right block or a left block according to the left/right flag. If it is a right block data item, in step 108 the data is stored in a right block region (referred to as a data memory R-4) of the four-digit memory 21. If it is a left block item data, in step 109 the data is stored in a left block region (referred to as a data memory L-4) of the four-digit memory 21. Then, in step 110 a modulus check is carried out, and in step 111 a parity check is carried out. If the results of these checks are negative (N) in step 112, it is judged that a read error has occurred and, in step 115, the contents of the buffer memory 18 and data memories R-4 and L-4 are cleared. Thereafter, the reading operation is repeated.

In the step 112, if the modulus and parity check is OK, it is judged whether or not the data item just read is the last item in the memory 18. If it is not the last item, the steps 105 to 113 are repeated. After the last item has been processed by means of the steps 105 to 113, it is judged in step 114 whether or not there is data in the six-digit memory 211. In reading four-digit data, six-digit data are not read normally, so that, in step 116, the left- and right-block data items of the four-digit memory 21 are transferred to the external device. In reading an eight-digit label, the step 114 may be omitted.

If in the step 106 six-digit data is detected, steps 117 to 126 are executed. In the step 117, it is judged whether the read data item corresponds to a left block or a right block. If it is a left block data item, the data item is stored in a left block region (data memory L-6) of the six-digit memory 211, and if it is a right block data item, it is stored in a right block region (data memory R-6) of the six-digit memory 211. A modulus check and a parity check are carried out in steps 120 and 121. In step 122, it is judged whether or not the results of the checks are OK. If the results are negative (N), the contents of the buffer memory 18 and six-digit memory 211 are cleared. If the results are OK, the step 123 is executed, and the steps 105 and 123 are repeated until the last data item of the buffer memory 18 is processed. When the last block has been processed, in step 124 it is judged whether the data memory R-4 or L-4 has data. If there is four-digit data, it means that the four-digit data erroneously exists in the data A when six-digit data are used. In step 125, therefore, the contents of the buffer memory 18, six-digit memory 211, and four-digit memory 21 are cleared, and the reading operation is repeated. Only when it is found in the step 124 that no data exists in the data memories R-4 and L-4 is a pair of six-digit data of the data memories R-6 and L-6 sent to the external device.

In the above embodiment, the four-digit memory 21 and six-digit memory 211 are provided separately. It is possible, however, to store four-digit data and six-digit data in a single memory. In this case, addresses of regions for storing the four-digit data and for storing the six-digit data must be given in advance. According to the addresses of the region for six-digit data, the CPU 19 reads data, stores the data in the register 25, and carries out the above-mentioned comparison.

In the above embodiment also, the four-digit memory (or the four-digit storage region) and the six-digit memory (or the six-digit storage region) are provided, however, this arrangement does not limit the present invention. For example the numbers of four-digit data items and six-digit data items may be detected to judge whether or not a reading operation of a bar code is correct.

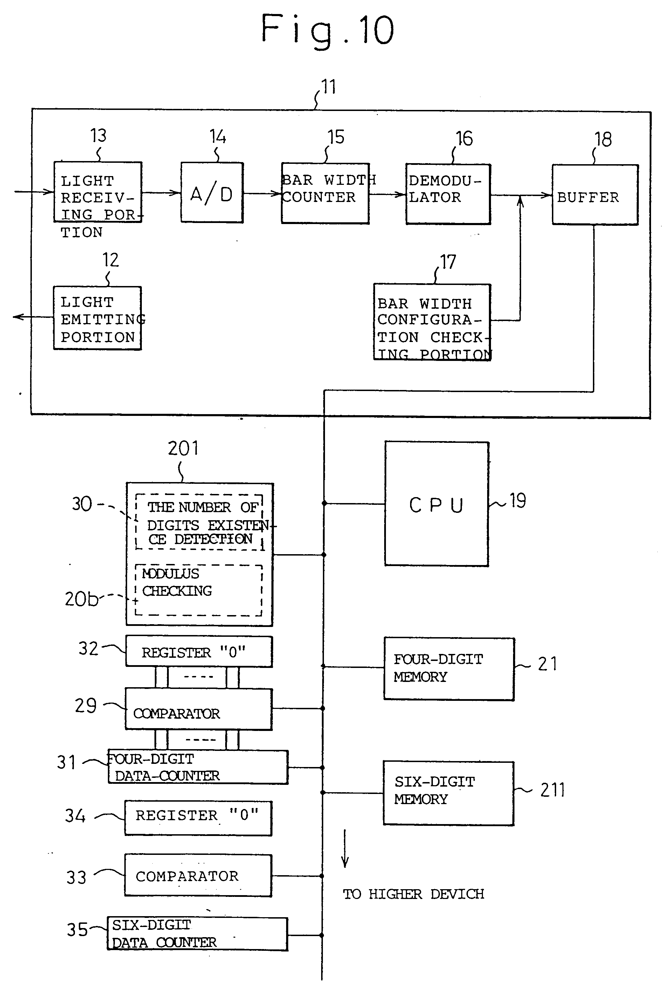

Such an embodiment is shown in Fig. 10.

In Fig. 10, parts which are the same as those of the Fig. 5 embodiment are represented by the same reference numerals as in Fig. 5. What is different from Fig. 5 is that a memory 201 stores a program 30 for detecting whether or not a data item has a certain number of digits so as to maintain respective counts of the numbers of four- and six-digit data items, instead of storing the data existence detecting program 20 of Fig. 5, and that there are arranged registers 31, 32, 34, and 35, and comparators 29 and 33 for judging from the count values whether or not there are both four-digit data items and six-digit data items, instead of the registers 24, 25, 27, and 28, and the comparators 23 and 26 which were used to judge whether or not there were both four-digit data and six-digit data items based on the data items themselves.

Operation of the embodiment shown in Fig. 10 will be explained with reference to the flowchart of Fig. 11.

In Fig. 11, steps 201 to 206 are the same as the steps 101 to 106 of Fig. 9. In step 206, it is judged whether a data item has four digits or six digits, and in step 207 or 218, the number of data items having those numbers of digits is counted. Steps 208 to 214, and steps 219 to 225 are respectively the same as those of the steps 107 to 113 and steps 117 to 123 of Fig. 9. If the read data item (block) has four digits, in step 215 it is judged whether or not the six-digit data counter 35 is zero. If it is not zero, it is judged that the read data of the reading operation are wrong, and the buffer memory, etc, are cleared. Only when it is zero are the read data items transferred to the external device. Similarly, if the read data item (block) has six digits, step 226 judges whether or not the value in the four-digit data counter 31 is zero. Only when it is zero are the read data items transferred to the external device.

It will be appreciated that, in other embodiments, the present invention can handle bar codes of other numbers of digits than eight-digits and 13-digits. Also, the number of blocks in a bar code is not limited to two as in the above-described embodiments.

## Claims

1. A bar code reading method, for reading a bar code including a block of data the number of digits of which is equal to one of a plurality of predetermined standard values (4/6), wherein, in a reading operation, one such block of the bar code is scanned a plurality of times to derive for that block a plurality of data items representative respectively of the data of the block;
characterised by the steps of:
(a) determining (102) the respective numbers of digits of the data items of the said plurality:
(b) storing (108, 109, 118, 119) the data items in storage regions (21_{N1}, 21_{N2}, ..., 21_{Nℓ}), according to the determined numbers of digits, in such a way that data items having the same number of digits are stored in the same storage region: and
(c) detecting (114, 124) whether or not data items have been stored in two different storage regions and, if so, determining that the said reading operation has produced erroneous data.

2. A bar code reading method, for reading a bar code including a block of data the number of digits of which is equal to one of a plurality of predetermined standard values (4/6), wherein, in a reading operation, one such block of the bar code is scanned a plurality of times to derive for that block a plurality of data items representative respectively of the data of the block;
characterised by the steps of:
(a) determining (202) the respective numbers of digits of the data items of the said plurality;
(b) for each different determined number of digits, counting (207, 218) the number of data items having that number of digits; and
(c) detecting (215, 226), based on the counted numbers of data items, whether or not there are two data items having different respective numbers of digits and, if so, determining that the said reading operation has produced erroneous data.

3. A method as claimed in claim 1 or 2, wherein in the said reading operation respective left and right blocks of the bar code are each scanned a plurality of times to derive a plurality of left block data items representative respectively of the data of the left block and a plurality of right block data items representative respectively of the data of the right block.

4. A method as claimed in claim 3, wherein the left block data items are stored (109, 119; 210, 221) in left block storage regions (L-4, L-6), according to the determined numbers of digits, in such a way that left block data items having the same number of digits are stored in the same left block storage region; and the right block data items are stored in right block storage regions, according to the determined numbers of digits, in such a way that right block data items having the same number of digits are stored in the same right block storage region.

5. A method as claimed in any preceding claim, wherein, in the step (a) of determining (102; 202) the respective numbers of digits of the data items, those data items whose determined numbers of digits are not equal to one of the said predetermined standard values (4/6) are discarded (103; 203).

6. A method as claimed in any preceding claim, wherein the data items are subjected (110, 111, 120, 121; 211, 212, 222, 223) to a modulus 10 check and a parity check.

7. A method as claimed in any preceding claim, wherein in the said reading operation the derived data items of the said plurality are stored (104; 204) in a buffer memory (18).

8. A method as claimed in claim 7 when read as appended to claim 1 or to any claim dependent upon claim 1, wherein the said data items stored in the said buffer memory (18) are read out (105) therefrom one by one and, for each data item read out, the number of digits in the data item is determined (106) using step (a) and the data item is stored (107-109, 117-119) in the appropriate storage region using step (b), whereafter, when all of the data items of the said plurality have been so read out and processed (113, 123), the step (c) is carried out to detect (114, 124) whether or not data items have been stored in two different storage regions.

9. A method as claimed in claim 7 when read as appended to claim 2 or to any claim dependent upon claim 2, wherein the said data items stored in the said buffer memory (18) are read out (205) therefrom one by one and, for each data item read out, the number of digits in the data item is determined (206) using step (a) and the data item is counted (207, 218) using step (b), whereafter, when all of the data items of the said plurality have been so read out and processed (214, 225), the step (c) is carried out to detect (215, 226) whether or not there are two data items having different respective numbers of digits.

10. A method as claimed in claim 7, 8 or 9, wherein the contents of the said buffer memory (18) are cleared (115, 125; 216, 227) if it is determined in the step (c) that the said reading operation has produced erroneous data.

11. A method as claimed in any one of claims 7 to 10, wherein, if it is detected in the step (c) that all of the data items of the said plurality have been stored in the same storage region, or all have the same number of digits as the case may be, the reading operation is determined to have been completed correctly and the contents of the said buffer memory are transmitted (116, 126: 217, 227) to a further device connected therewith.

12. Bar code reading apparatus, for reading a bar code including a block of data the number of digits of which is equal to one of a plurality of predetermined standard values (4/6), which apparatus comprises:
data item generating means (11) operable in a reading operation of the apparatus to scan one such block of the bar code a plurality of times so as to derive for that block a plurality of data items representative respectively of the data of the block;
characterised by:
digit-number determining means (22) connected for receiving the data items derived by the data item generating means (11) and operable to determine the respective numbers of digits of the data items of the said plurality;
a plurality of data item storage means (21_{N1}, 21_{N2}, ..., 21_{Nℓ}) corresponding respectively to the different standard values;
storage control means (19), connected for receiving the data items derived by the data item generating means and also connected to each of the said data item storage means (21_{N1}, 21_{N2}, ..., 21_{Nℓ}), for causing the data items to be stored in the data item storage means, according to the determined numbers of digits, in such a way that data items having the same number of digits are stored in the same storage means; and
error detection means (19, 20a, 23-28) connected to said storage means and operable to detect whether or not data items have been stored in two different storage means and, if so, to determine that the said reading operation has produced erroneous data.

13. Apparatus as claimed in claim 12, wherein the said error detection means (19, 20a, 23-28) comprise, for each different predetermined standard value, a first register (24/27) having a number of digits equal to the standard value concerned and connected with the said data item storage means corresponding to that standard value for receiving therefrom in turn each data item of the said plurality having that number of digits and for storing the received data item temporarily, a second register (25/28) also having a number of digits equal to the standard value concerned and storing a predetermined null value, all the digits of which are zero, and comparator means (23/26) connected to the said first and second registers (24, 25 / 27, 28) and operable to compare the data item stored in the first register with the said predetermined null value and, if the data item stored in the first register differs from the said predetermined null value, to detect that there is a data item in the said plurality that has a number of digits equal to the standard value concerned.

14. Apparatus as claimed in claim 12 or 13, wherein the said digit-number detecting means (23) include discarding means connected for receiving the data items of the said plurality derived by the data item generating means and operable to discard those data items whose determined numbers of digits are not equal to one of the said predetermined standard values.

15. Bar code reading apparatus, for reading a bar code including a block of data the number of digits of which is equal to one of a plurality of predetermined standard values (4/6), which apparatus comprises:
data item generating means (11) operable in a reading operation of the apparatus to scan one such block of the bar code a plurality of times so as to derive for that block a plurality of data items representative respectively of the data of the block;
characterised by:
digit-number determining means (23) connected for receiving the data items derived by the data item generating means (11) and operable to determine the respective numbers of digits of the data items of the said plurality;
a plurality of counting means (31, 35) corresponding respectively to the different standard values (4/6), each counting means being connected to count, for the standard value to which that counting means corresponds, the number of data items determined by the digit-number determining means as having a number of digits equal to that standard value; and
error detection means (19, 29, 30, 32, 33, 34) connected to the said counting means for receiving therefrom the respective counted numbers of data items and operable to detect on the basis of those respective counted numbers whether or not there are two data items having different respective numbers of digits and, if so, to determine that the said reading operation has produced erroneous data.

16. Apparatus as claimed in claim 15, further comprising a plurality of data item storage means (21, 211) corresponding respectively to the different standard values; and
storage control means (19), connected for receiving the data items derived by the said data item generating means and also connected to each of the said data item storage means, for causing the data items to be stored in the data item storage means, according to the determined numbers of digits thereof, in such a way that data items having the same number of digits are stored in the same data item storage means.

17. Apparatus as claimed in claim 15 or 16, wherein the said counting means for each different predetermined standard value comprises a counter (31/35) connected to the said digit-number determining means for receiving therefrom in turn the respective determined numbers of digits of the data items of the said plurality and operable to increase its count value by one each time the received number of digits is equal to the standard value concerned, and the said error detection means (19, 29, 30, 32-34) comprise, for each different predetermined standard value, a register (32/34), storing a predetermined null value all the digits of which are zero, and comparator means (29/33) connected to the said counter and to the said register and operable to compare the count value in the said counter with the predetermined null value and, if that count value differs from the predetermined null value, to detect that there is a data item with a number of digits equal to the standard value concerned.

18. Apparatus as claimed in claim 15, 16 or 17, wherein said error detection means (19, 29, 30, 32-34) comprise discarding means connected for receiving the data items of the said plurality derived by the data item generating means and operable to discard those data items whose determined numbers of digits are not equal to one of the said predetermined standard values.

19. Apparatus as claimed in any one of claims 12 to 18, further comprising checking means (20b) connected for receiving the data items of the said plurality derived by the data item generating means and operable to carry out a modulus check and a parity check on each received data item.

20. Apparatus as claimed in any one of claims 12 to 19, further comprising a buffer memory (18) connected for receiving the data items of the said plurality derived by the data item generating means (11) and operable to store each such data item.

21. Apparatus as claimed in claim 20, further comprising clearing means (19) connected with the said error detection means and the said buffer memory and operable to clear the contents of the said buffer memory if the error detection means determines that the reading operation has produced erroneous data.

22. Apparatus as claimed in claim 20 or 21, wherein the said error detection means further comprises data transmission means (19) operable, if it is detected by the error detection means that all of the data items of the plurality have been stored in the same data item storage means, or all have the same number of digits as the case may be, to determine that the reading operation has been completed correctly and to transmit the contents of the said buffer memory (18) to a further device connected therewith.

## Patentansprüche

1. Strichcodeleseverfahren zum Lesen eines Strichcodes, welcher einen Block von Daten enthält, deren Anzahl von Ziffern gleich einem einer Vielzahl von vorbestimmten Standardwerten (4/6) ist, bei welchem in einem Lesevorgang ein derartiger Block des Strichcodes mehrmals abgetastet wird, um für diesen Block eine Vielzahl von Datenelementen herzuleiten, die jeweils die Daten des Blocks darstellen;
gekennzeichnet durch die Schritte:
(a) Bestimmen (102) der jeweiligen Anzahlen von Ziffern der Datenelemente der Vielzahl;
(b) Speichern (108, 109, 118, 119) der Datenelemente in Speicherbereichen (21_{N1}, 21_{N2}, ... 21_{Nℓ}) gemäß den bestimmten Anzahlen von Ziffern in der Weise, daß Datenelemente, die dieselbe Anzahl von Ziffern haben, in demselben Speicherbereich gespeichert werden; und
c) Erfassen (114, 124), ob Datenelemente in zwei verschiedenen Speicherbereichen gespeichert wurden oder nicht, und, wenn dies der Fall ist, Bestimmen, daß der Lesevorgang fehlerhafte Daten produziert hat.

2. Strichcodeleseverfahren zum Lesen eines Strichcodes, welcher einen Datenblock enthält, dessen Anzahl von Ziffern gleich einem einer Vielzahl von vorbestimmten Standardwerten (4/6) ist, bei welchem in einem Lesevorgang ein derartiger Block des Strichcodes mehrmals abgetastet wird, um für diesen Block eine Vielzahl von Datenelementen herzuleiten, die jeweils die Daten des Blocks darstellen;
gekennzeichnet durch die Schritte:
(a) Bestimmen (202) der jeweiligen Anzahlen von Ziffern der Datenelemente der Vielzahl;
(b) Zählen (207, 218) der Anzahl von Datenelementen, die diese Anzahl von Ziffern hat, für jede verschiedene festgestellte Anzahl von Ziffern; und
(c) Erfassen (215, 226) auf der Basis der gezählten Anzahlen von Datenelementen, ob zwei Datenelemente mit jeweils verschiedenen Anzahlen von Ziffern vorhanden sind oder nicht, und, wenn dies der Fall ist, Bestimmen, daß der Lesevorgang fehlerhafte Daten erzeugt hat.

3. Verfahren nach Anspruch 1 oder 2, bei welchem bei dem Lesevorgang jeweilige linke und rechte Blöcke des Strichcodes jeweils mehrmals abgetastet werden, um eine Vielzahl von linken Blockdatenelementen, die jeweils die Daten des linken Blocks darstellen, und eine Vielzahl von rechten Blockdatenelementen, die jeweils die Daten des rechten Blocks darstellen, herzuleiten.

4. Verfahren nach Anspruch 3, bei welchem die linken Blockdatenelemente in linken Blockspeicherbereichen (L-4, L-6) gemäß den bestimmten Anzahlen von Ziffern in der Weise gespeichert (109, 119; 210, 221) werden, daß linke Blockdatenelemente, die dieselbe Anzahl von Ziffern haben, in demselben linken Blockspeicherbereich gespeichert werden; und die rechten Blockdatenelemente in rechten Blockspeicherbereichen gemäß den bestimmten Anzahlen von Ziffern in der Weise gespeichert werden, daß rechte Blockdatenelemente, die dieselbe Anzahl von Ziffern haben, in demselben rechten Blockspeicherbereich gespeichert werden.

5. Verfahren nach einem der vorstehenden Ansprüche, bei welchem in dem Schritt (a) des Bestimmens (102; 202) der jeweiligen Anzahlen von Ziffern der Datenelemente diejenigen Datenelemente, deren bestimmte Anzahl von Ziffern nicht gleich einem der vorbestimmten Standardwerte (4/6) ist, verworfen (103; 203) werden.

6. Verfahren nach einem der vorstehenden Ansprüche, bei welchem die Datenelemente einer Modul 10 Prüfung und einer Paritätsprüfung unterzogen (110, 111, 120, 121; 211, 212, 222, 223) werden.

7. Verfahren nach einem der vorstehenden Ansprüche, bei welchem bei dem Lesevorgang die hergeleiteten Datenelemente der Vielzahl in einem Pufferspeicher (18) gespeichert (104; 204) werden.

8. Verfahren nach Anspruch 7, als an Anspruch 1 oder an einen von Anspruch 1 abhängigen Anspruch angefügt gelesen, bei welchem die in dem Pufferspeicher (18) gespeicherten Datenelemente aus diesem einzeln ausgelesen (105) werden und für jedes ausgelesene Datenelement die Anzahl von Ziffern in dem Datenelement unter Verwendung von Schritt (a) bestimmt (106) wird und das Datenelement unter Verwendung von Schritt (b) in dem zugehörigen Speicherbereich gespeichert (107-109, 117-119) wird, woraufhin dann, wenn alle Datenelemente dieser Vielzahl auf diese Weise ausgelesen und verarbeitet (113, 123) wurden, der Schritt (c) ausgeführt wird, um zu erfassen (114, 124), ob Datenelemente in zwei verschiedenen Speicherbereichen gespeichert wurden oder nicht.

9. Verfahren nach Anspruch 7, als an Anspruch 2 oder an einen von Anspruch 2 abhängigen Anspruch angefügt gelesen, bei welchem in dem Pufferspeicher (18) gespeicherte Datenelemente aus diesem einzeln ausgelesen (205) werden und für jedes ausgelesene Datenelement die Anzahl von Ziffern in dem Datenelement unter Verwendung von Schritt (a) bestimmt (206) wird und das Datenelement unter Verwendung von Schritt (b) gezählt (207, 218) wird, woraufhin dann, wenn alle Datenelemente dieser Vielzahl auf diese Weise ausgelesen und verarbeitet (214, 225) wurden, der Schritt (c) ausgeführt wird, um zu erfassen (215, 226), ob zwei Datenelemente, welche jeweils verschiedene Anzahlen von Ziffern haben, vorhanden sind oder nicht.

10. Verfahren nach Anspruch 7, 8 oder 9, bei welchem der Inhalt des Pufferspeichers (18) gelöscht (115, 125; 216, 227) wird, wenn in Schritt (c) festgestellt wird, daß der Lesevorgang fehlerhafte Daten produziert hat.

11. Verfahren nach einem der Ansprüche 7 bis 10, bei welchem dann, wenn in Schritt (c) festgestellt wird, daß alle Datenelemente der Vielzahl in demselben Speicherbereich gespeichert wurden, oder alle dieselbe Anzahl von Ziffern haben, was der Fall sein mag, bestimmt wird, das der Lesevorgang korrekt vollendet wurde und der Inhalt des Pufferspeichers zu einer mit diesem verbundenen Vorrichtung übertragen (116, 126; 217, 227) wird.

12. Strichcodelesevorrichtung zum Lesen eines Strichcodes, welcher einen Datenblock enthält, dessen Anzahl von Ziffern gleich einem einer Vielzahl von vorbestimmten Standardwerten ist, welche Vorrichtung umfaßt:
eine Datenelementerzeugungseinrichtung (11), die in einem Lesevorgang der Vorrichtung betätigbar ist, um einen derartigen Block des Strichcodes mehrmals abzutasten, um so für diesen Block eine Vielzahl von Datenelementen herzuleiten, die jeweils die Daten des Blocks darstellen;
gekennzeichnet durch:
eine Einrichtung (22) zur Bestimmung der Ziffernanzahl, die zum Empfang der durch die Datenelementerzeugungseinrichtung (11) hergeleiteten Datenelemente angeschlossen ist und betätigbar ist, um die jeweiligen Anzahlen von Ziffern der Datenelemente der Vielzahl zu bestimmen;
eine Vielzahl von Datenelementspeichereinrichtungen (21_{N1}, 21_{N2}, ... 21_{Nℓ}), entsprechend jeweils den verschiedenen Standardwerten;
eine Speichersteuereinrichtung (19), die zum Empfang der durch die Datenelementerzeugungseinrichtung hergeleiteten Datenelemente angeschlossen ist und ferner mit jeder der Datenelementspeichereinrichtungen verbunden ist, um zu veranlassen, daß die Datenelemente in den Datenelementspeichereinrichtungen entsprechend der bestimmten Anzahl von Ziffern in der Weise gespeichert werden, daß Datenelemente, die dieselbe Anzahl von Ziffern haben, in derselben Speichereinrichtung gespeichert werden; und
Fehlererfassungseinrichtungen (19, 20a, 23-28), die mit der Speichereinrichtung verbunden sind und betätigbar sind, um zu erfassen, ob Datenelemente in zwei verschiedenen Speichereinrichtungen gespeichert wurden oder nicht, und, wenn dies der Fall ist, zu bestimmen, daß der Lesevorgang fehlerhafte Daten produziert hat.

13. Vorrichtung nach Anspruch 12, bei welcher die Fehlererfassungseinrichtungen (19, 20a, 23-28) für jeden unterschiedlichen vorbestimmten Standardwert ein erstes Register (24/27), welches eine Anzahl von Ziffern hat, die gleich dem betreffenden Standardwert ist, und welches mit der Datenelementspeichereinrichtung verbunden ist, die dem Standardwert entspricht, um von dieser wiederum jedes Datenelement der Vielzahl zu empfangen, welches die Anzahl von Ziffern hat, und zum vorübergehenden Speichern der empfangenen Datenelemente, ein zweites Register (25/28), das ebenfalls eine Anzahl von Ziffern hat, die dem betreffenden Standardwert gleich ist, und einen vorbestimmten Nullwert speichert, wobei alle Ziffern davon Null sind, und eine Vergleichseinrichtung (23/26) umfassen, die mit dem ersten und dem zweiten Register (24, 25 / 27, 28) verbunden ist und betätigbar ist, um das in dem ersten Register gespeicherte Datenelement mit dem vorbestimmten Nullwert zu vergleichen und, wenn das in dem ersten Register gespeicherte Datenelement sich von dem vorbestimmten Nullwert unterscheidet, zu erfassen, daß ein Datenelement in dieser Vielzahl vorhanden ist, welches eine Anzahl von Ziffern hat, die gleich dem betreffenden Standardwert ist.

14. Vorrichtung nach Anspruch 12 oder 13, bei welcher die Ziffernanzahlerfassungseinrichtung (23) eine Verwerfungseinrichtung enthält, die zum Empfang der Datenelemente der Vielzahl angeschlossen ist, welche durch die Datenelementerzeugungseinrichtung hergeleitet werden, und betätigbar ist, um diejenigen Datenelemente zu verwerfen, deren bestimmte Anzahlen von Ziffern nicht gleich einem der vorbestimmten Standardwerte sind.

15. Strichcodelesevorrichtung zum Lesen eines Strichcodes, welcher einen Datenblock enthält, dessen Anzahl von Ziffern gleich einem einer Vielzahl von vorbestimmten Standardwerten (4/6) ist, welche Vorrichtung umfaßt:
eine Datenelementerzeugungseinrichtung (11), die in einem Lesevorgang der Vorrichtung betätigbar ist, um einen derartigen Block des Strichcodes mehrmals abzutasten, um so für diesen Block eine Vielzahl von Datenelementen herzuleiten, die jeweils die Daten des Blocks darstellen;
gekennzeichnet durch:
eine Einrichtung (23) zur Bestimmung der Ziffernanzahl, die zum Empfang der Datenelemente, die durch die Datenelementerzeugungseinrichtung (11) hergeleitet wurden, angeschlossen ist und betätigbar ist, um die jeweiligen Anzahlen von Ziffern der Datenelemente der Vielzahl zu bestimmen;
eine Vielzahl von Zähleinrichtungen (31, 35) jeweils entsprechend den verschiedenen Standardwerten (4/6), welche Zähleinrichtungen jeweils angeschlossen sind, um für den Standardwert, welchem diejenige Zähleinrichtung entspricht, die Anzahl der Datenelemente zu zählen, die durch die Einrichtung zur Bestimmung der Ziffernanzahl als eine dem Standardwert gleiche Anzahl von Ziffern aufweisend bestimmt werden; und
Fehlererfassungseinrichtungen (19, 29, 30, 32, 33, 34), die mit der Zähleinrichtung verbunden sind, um von dieser die jeweiligen gezählten Anzahlen der Datenelemente zu empfangen, und betätigbar sind, um auf der Basis derjenigen jeweils gezählten Anzahlen zu erfassen, ob zwei Datenelemente mit verschiedenen jeweiligen Ziffernanzahlen vorhanden sind oder nicht, und, wenn dies der Fall ist, zu bestimmen, daß der Lesevorgang fehlerhafte Daten produziert hat.

16. Vorrichtung nach Anspruch 15, ferner umfassend eine Vielzahl von Datenelementspeichereinrichtungen (21, 211), die jeweils den unterschiedlichen Standardwerten entsprechen; und
eine Speichersteuereinrichtung (19), die zum Empfang der Datenelemente angeschlossen ist, die von der Datenelementerzeugungseinrichtung hergeleitet werden, und ferner mit jeder der Datenelementspeichereinrichtungen verbunden ist, um zu veranlassen, daß die Datenelemente in der Datenelementspeichereinrichtung gemäß der bestimmten Anzahlen von Ziffern derselben in der Weise gespeichert werden, daß Datenelemente, die dieselbe Anzahl von Ziffern haben, in derselben Datenelementspeichereinrichtung gespeichert werden.

17. Vorrichtung nach Anspruch 15 oder 16, bei welcher die Zähleinrichtung für jeden unterschiedlichen vorbestimmten Standardwert einen Zähler (31/35) umfaßt, der mit der Ziffernanzahlbestimmungseinrichtung verbunden ist, um von dieser wiederum die jeweils bestimmten Anzahlen von Ziffern der Datenelemente dieser Vielzahl zu empfangen, und betätigbar ist, um seinen Zählwert jedes Mal dann um eins zu erhöhen, wenn die empfangene Anzahl von Ziffern gleich dem betreffenden Standardwert ist, und die Fehlererfassungseinrichtungen (19, 29, 30, 32-34) für jeden unterschiedlichen vorbestimmten Standardwert ein Register (32/34) umfassen, welches einen vorbestimmten Nullwert, von welchem alle Ziffern Null sind, speichert, und eine Vergleichseinrichtung (29/33), die mit dem Zähler und dem Register verbunden ist und betätigbar ist, um den Zählwert in dem Zähler mit dem vorbestimmten Nullwert zu vergleichen und dann, wenn dieser Zählwert sich von dem vorbestimmten Nullwert unterscheidet, festzustellen, daß ein Datenelement mit einer Anzahl von Ziffern gleich dem betreffenden Standardwert vorhanden ist.

18. Vorrichtung nach Anspruch 15, 16 oder 17, bei welcher die Fehlererfassungseinrichtungen (19, 29, 30, 32-34) eine Verwerfungseinrichtung umfassen, die zum Empfang der Datenelemente der Vielzahl angeschlossen ist, die von der Datenelementerzeugungseinrichtung hergeleitet werden, und betätigbar ist, um diejenigen Datenelemente zu verwerfen, deren bestimmte Anzahlen von Ziffern nicht gleich einem der vorbestimmten Standardwerte sind.

19. Vorrichtung nach einem der Ansprüche 12 bis 18, ferner umfassend eine Prüfeinrichtung (20b), die zum Empfang der Datenelemente der Vielzahl angeschlossen ist, welche von der Datenelementerzeugungseinrichtung hergeleitet wurden, und betätigbar ist, um eine Modulprüfung und eine Paritätsprüfung an jedem empfangenen Datenelement durchzuführen.

20. Vorrichtung nach einem der Ansprüche 12 bis 19, ferner umfassend einen Pufferspeicher (18), der zum Empfang der Datenelemente der Vielzahl angeschlossen ist, die von der Datenelementerzeugungseinrichtung (11) hergeleitet werden, und zum Speichern jedes derartigen Datenelements betätigbar ist.

21. Vorrichtung nach Anspruch 20, ferner umfassend eine Löscheinrichtung (19), die an die Fehlererfassungseinrichtung und den Pufferspeicher angeschlossen ist und betätigbar ist, um den Inhalt des Pufferspeichers zu löschen, wenn die Fehlererfassungeinrichtung bestimmt, daß der Lesevorgang fehlerhafte Daten produziert hat.

22. Vorrichtung nach Anspruch 20 oder 21, bei welcher die Fehlerfassungseinrichtung ferner eine Datenübertragungseinrichtung (19) umfaßt, die betätigbar ist, um dann, wenn von der Fehlererfassungseinrichtung festgestellt wird, daß alle Datenelemente der Vielzahl in derselben Datenelementspeichereinrichtung gespeichert wurden oder dementsprechend alle dieselbe Anzahl von Ziffern haben, zu bestimmen, daß der Lesevorgang korrekt vollendet wurde und den Inhalt des Pufferspeichers (18) zu einer mit diesem verbundenen weiteren Vorrichtung zu übertragen.

## Revendications

1. Procédé de lecture de code à barres pour lire un code à barres incluant un bloc de données dont le nombre d'éléments numériques est égal à l'une d'une pluralité de valeurs standards prédéterminées (4/6), dans lequel, au cours d'une opération de lecture, un tel bloc du code à barres est balayé une pluralité de fois afin de dériver pour ce bloc une pluralité d'éléments de données respectivement représentatifs des données du bloc ;
caractérisé par les étapes de :
(a) détermination (102) des nombres respectifs d'éléments numériques des éléments de données de ladite pluralité ;
(b) stockage (108, 109, 118, 119) des éléments de données dans des zones de stockage (21_{N1}, 21_{N2}, ... 21_{NI}), en fonction des nombres déterminés d'éléments numériques, d'une manière telle que les éléments de données comportant les mêmes nombres d'éléments numériques soient stockés dans la même zone de stockage ;
(c) détection (114, 124) de si oui ou non des éléments de données ont été stockés dans deux zones de stockage différentes et dans l'affirmative, détermination du fait que ladite opération de lecture a généré des données erronées.

2. Procédé de lecture de code à barres pour lire un code à barres incluant un bloc de données dont le nombre d'éléments numériques est égal à l'une d'une pluralité de valeurs standards prédéterminées (4/6), dans lequel, au cours d'une opération de lecture, un tel bloc du code à barres est balayé une pluralité de fois afin de dériver pour ce bloc une pluralité d'éléments de données respectivement représentatifs des données du bloc ;
caractérisé par les étapes de :
(a) détermination (202) des nombres respectifs d'éléments numériques des éléments de données de ladite pluralité ;
(b) pour chaque nombre déterminé différent d'éléments numériques, comptage (207, 218) du nombre d'éléments numériques présentant ce nombre d'éléments numériques ;
(c) détection (215, 226), sur la base des nombres comptés d'éléments numériques, de si oui ou non il existe deux éléments de données présentant des nombres respectifs différents d'éléments numériques et dans l'affirmative, détermination du fait que ladite opération de lecture a produit des données erronées

3. Procédé selon la revendication 1 ou 2, dans lequel, lors de ladite opération de lecture, des blocs gauche et droit respectifs du code barres sont chacun balayés une pluralité de fois pour dériver une pluralité d'éléments de données de bloc gauche respectivement représentatifs des données du bloc gauche et une pluralité d'éléments de données de bloc droit respectivement représentatifs des données du bloc droit.

4. Procédé selon la revendication 3, dans lequel les éléments de données de bloc gauche sont stockés (109, 119 ; 210, 221) dans des zones de stockage de bloc gauche (L-4, L-6), en fonction des nombres déterminés d'éléments numériques, de manière à ce que les éléments de données de bloc gauche comportant le même nombre d'éléments numériques soient stockés dans la même zone de stockage de bloc gauche ; et de manière à ce que les éléments de données de bloc droit soient stockés dans des zones de stockage de bloc droit, en fonction des nombres déterminés d'éléments numériques, de manière à ce que les éléments de données de bloc droit comportant le même nombre d'éléments numériques soient stockés dans la même zone de stockage de bloc droit.

5. Procédé selon l'une quelconque des revendications précédentes, dans lequel, lors de l'étape (a) de détermination (102 ; 202) des nombres respectifs d'éléments numériques des éléments de données, les éléments de données dont des nombres déterminés d'éléments numériques ne sont pas égaux à l'une desdites valeurs standards prédéterminées (4/6) sont écartés (103 ; 203).

6. Procédé selon l'une quelconque des revendications précédentes, dans lequel les éléments de données sont soumis (110, 111, 120, 121 ; 211, 212, 222, 223) à une vérification de modulo 10 et à une vérification de parité.

7. Procédé selon l'une quelconque des revendications précédentes, dans lequel, lors de ladite opération de lecture, les éléments de données dérivés de ladite pluralité sont stockés (104; 204) dans une mémoire tampon (18).

8. Procédé selon la revendication 7 lorsqu'elle dépend de la revendication 1 ou selon l'une quelconque des revendications dépendant de la revendication 1, dans lequel lesdits éléments de données stockés dans ladite mémoire tampon (18) sont lus (105) dans celle-ci un par un et pour chaque élément de données lu, le nombre d'éléments numériques dans l'élément de données est déterminé (106) en utilisant l'étape (a) et l'élément de données est stocké (107 à 109, 117 à 119) dans la zone de stockage appropriée en utilisant l'étape (b), après quoi, lorsque tous les éléments de données de ladite pluralité ont été ainsi lus et traités (113, 123), l'étape (c) est mise en oeuvre afin de détecter (114, 124) si oui ou non les éléments de données ont été stockés dans deux zones de stockage différentes.

9. Procédé selon la revendication 7 lorsqu'elle dépend de la revendication 2 ou selon l'une quelconque des revendications dépendant de la revendication 2, dans lequel lesdits éléments de données stockés dans ladite mémoire tampon (18) sont lus (205) dans celle-ci un par un et pour chaque élément de donnée lu, le nombre d'éléments numériques dans l'élément de données est déterminé (206) en utilisant l'étape (a) et l'élément de données est compté (207, 218) en utilisant l'étape (b), après quoi, lorsque tous les éléments de données de ladite pluralité ont été ainsi lus et traités (214, 225), I'étape (c) est mise en oeuvre afin de détecter (215, 226) si oui ou non il existe deux éléments de données comportant des nombres respectifs différents d'éléments numériques.

10. Procédé selon la revendication 7, 8 ou 9, dans lequel le contenu de ladite mémoire tampon (18) est effacé (115, 125 ; 216, 227) s'il est déterminé lors de l'étape (c) que ladite opération de lecture a généré des données erronées.

11. Procédé selon l'une quelconque des revendications 7 à 10, dans lequel, s'il est détecté lors de l'étape (c) que tous les éléments de données de ladite pluralité ont été stockés dans la même zone de stockage ou que tous comportent le même nombre d'élément numériques, selon le cas, il est déterminé que l'opération de lecture a été terminée correctement et le contenu de ladite mémoire tampon est transmis (116, 126 ; 217, 227) à un dispositif supplémentaire qui lui est connecté.

12. Appareil de lecture de code à barres pour lire un code à barres incluant un bloc de données dont le nombre d'éléments numériques est égal à l'une d'une pluralité de valeurs standards prédéterminées (4/6), cet appareil comprenant :
des moyens de génération d'éléments de données (11) fonctionnant au cours d'une opération de lecture de l'appareil pour balayer un tel bloc du code à barres une pluralité de fois de manière à dériver pour ce bloc une pluralité d'éléments de données respectivement représentatifs des données du bloc ;
caractérisé par :
des moyens de détermination de nombre d'éléments numériques (22) connectés de manière à recevoir des éléments de données dérivés par les moyens de génération d'éléments de données (11) et servant à déterminer les nombres respectifs d'éléments numériques des éléments de données de ladite pluralité ;
une pluralité de moyens de stockage d'éléments de données (21_{N1}, 21_{N2}, ..., 21_{NI}), correspondant respectivement aux valeurs standards différentes.
des moyens de commande de stockage (19), connectés afin de recevoir les éléments de données dérivés par les moyens de génération d'éléments de données et connectés aussi à chacun desdits moyens de stockage d'éléments de données (21_{N1}, 21_{N2}, ... 21_{NI}), pour commander les éléments de données de manière à ce qu'ils soient stockés dans les moyens de stockage d'éléments de données, en fonction des nombres prédéterminés d'éléments numériques, d'une manière telle que les éléments de données comportant le même nombre d'éléments numériques soient stockés dans les mêmes moyens de stockage ; et
des moyens de détection d'erreur (19, 20a, 23 à 28) connectés auxdits moyens de stockage et servant à détecter si oui ou non les éléments de données ont été stockés dans deux moyens de stockage différents et dans l'affirmative, servant à déterminer que ladite opération de lecture a généré des données erronées.

13. Appareil selon la revendication 12, dans lequel lesdits moyens de détection d'erreur (19, 20a, 23 à 28) comprennent, pour chaque valeur standard prédéterminée différente, un premier registre (24/27) comportant un nombre d'éléments numériques égal à la valeur standard concernée et connecté auxdits moyens de stockage d'éléments de données correspondant à cette valeur standard pour recevoir de ceux-ci à son tour chaque élément de données de ladite pluralité comportant ce nombre d'éléments numériques et pour stocker l'élément de données reçu temporairement, un second registre (25/28) comportant aussi un nombre d'éléments numériques égal à la valeur standard concernée et stockant une valeur nulle prédéterminée, tous ses élément numériques valant zéro, et des moyens de comparateur (23/26) connectés auxdits premier et second registres (24, 25/27, 28) et servant à comparer l'élément de données stocké dans le premier registre à ladite valeur nulle prédéterminée et si l'élément de données stocké dans le premier registre diffère de ladite valeur nulle prédéterminée, servant à détecter qu'il existe un élément de données dans ladite pluralité qui comporte un nombre d'éléments numériques égal à la valeur standard concernée.

14. Appareil selon la revendication 12 ou 13, dans lequel lesdits moyens de détection de nombre d'éléments numériques (23) incluent des moyens d'écartement connectés afin de recevoir les éléments de données de ladite pluralité dérivés par les moyens de génération d'éléments de données et servant à écarter les éléments de données dont les nombres déterminés d'éléments numériques ne sont pas égaux à l'une desdites valeurs standards prédéterminées.

15. Appareil de lecture de code à barres pour lire un code à barres incluant un bloc de données dont le nombre d'éléments numériques est égal à l'une d'une pluralité de valeurs standards prédéterminées (4/6), l'appareil comprenant :
des moyens de génération d'éléments de données (11) servant, au cours d'une opération de lecture de l'appareil, à balayer un tel bloc du code à barres une pluralité de fois de manière à dériver pour ce bloc une pluralité d'éléments de données respectivement représentatifs des données du bloc ;
caractérisé par :
des moyens de détermination de nombre d'éléments numériques (23) connectés de manière à recevoir les éléments de données dérivés par les moyens de génération d'éléments de données (11) et servant à déterminer les nombres respectifs d'éléments numériques des éléments de données de ladite pluralité ;
une pluralité de moyens de comptage (31, 35) correspondant respectivement aux différentes valeurs standards (4/6), chacun des moyens de comptage étant connecté de manière à compter, pour la valeur standard à laquelle ces moyens de comptage correspondent, le nombre d'éléments de données déterminé par les moyens de détermination de nombre d'éléments numériques comme comportant un nombre d'éléments numériques égal à cette valeur standard ; et
des moyens de détection d'erreur (19, 29, 30, 32, 33, 34) connectés auxdits moyens de comptage pour recevoir à partir de ceux-ci les nombres comptés respectifs d'éléments de données et servant à détecter, en se basant sur ces nombres comptés respectifs, si oui ou non il existe deux éléments de données présentant des nombres respectifs différents d'éléments numériques et dans l'affirmative, servant à déterminer que ladite opération de lecture a généré des données erronées.

16. Appareil selon la revendication 15, comprenant en outre une pluralité de moyens de stockage d'éléments de données (21, 211) correspondant respectivement aux différentes valeurs standards ; et
des moyens de commande de stockage (19), connectés afin de recevoir les éléments de données dérivés par lesdits moyens de génération d'éléments de données et connectés aussi à chacun desdits moyens de stockage d'éléments de données, de manière à ce que les éléments de données soient stockés dans les moyens de stockage d'éléments de données, en fonction des nombres déterminés de leurs éléments numériques, de manière à ce que les éléments de données comportant le même nombre d'éléments numériques soient stockés dans les mêmes moyens de stockage d'éléments de données.

17. Appareil selon la revendication 15 ou 16, dans lequel lesdits moyens de comptage pour chaque valeur standard prédéterminée différente comprennent un compteur (31/35) connecté auxdits moyens de détermination de nombre d'éléments numériques afin de recevoir à partir de ceux-ci à son tour les nombres d'éléments numériques déterminés respectifs des éléments de données de ladite pluralité et servant à augmenter sa valeur de comptage d'une unité chaque fois que le nombre d'éléments numériques reçus est égal à la valeur standard en question, et lesdits moyens de détection d'erreur (19, 29, 30, 32 à 34) comprennent, pour chaque valeur standard prédéterminée différente, un registre (32/34) stockant une valeur nulle prédéterminée dont tous les élément numériques valent zéro, et les moyens de comparaison (29/33) connectés audit compteur et audit registre, et servant à comparer la valeur de comptage dans ledit compteur à la valeur nulle prédéterminée et si cette valeur de comptage diffère de la valeur nulle prédéterminée, servant à détecter qu'il existe un élément de données comportant un nombre d'éléments numériques égal à la valeur standard en question.

18. Appareil selon la revendication 15, 16, ou 17, dans lequel lesdits moyens de détection d'erreur (19, 29, 30, 32 à 34) comprennent des moyens d'écartement connectés afin de recevoir les éléments de données de ladite pluralité dérivés par les moyens de génération d'éléments de données et servant à écarter les éléments de données dont les nombres prédéterminés d'éléments numériques ne sont pas égaux à l'une desdites valeurs standards prédéterminées.

19. Appareil selon l'une quelconque des revendications 12 à 18, comprenant en outre des moyens de vérification (20b) connectés afin de recevoir les éléments de données de ladite pluralité dérivés par les moyens de génération d'éléments de données et servant à mettre en oeuvre une vérification de modulo et une vérification de parité sur chaque élément de données reçu.

20. Appareil selon l'une quelconque des revendications 12 à 19, comprenant en outre une mémoire tampon (18) connectée afin de recevoir les éléments de données de ladite pluralité dérivés par les moyens de génération d'éléments de données (11) et servant à stocker chaque tel élément de données.

21. Appareil selon la revendication 20, comprenant en outre des moyens de remise à zéro (19) connectés auxdits moyens de détection d'erreur et à ladite mémoire tampon et servant à effacer le contenu de ladite mémoire tampon si lesdits moyens de détection d'erreur déterminent le fait que l'opération de lecture a généré des données de lecture erronées.

22. Appareil selon la revendication 20 ou 21, dans lequel lesdits moyens de détection d'erreur comprennent en outre des moyens de transmission de données (19) servant, s'il est détecté par les moyens de détection d'erreur que tous les éléments de données de la pluralité ont été stockés dans les mêmes moyens de stockage d'élément de données ou que tous présentent le même nombre d'éléments numériques, selon le cas, à déterminer que l'opération de lecture a été terminée correctement et à transmettre le contenu de ladite mémoire tampon (18) à un dispositif supplémentaire qui lui est connecté.
